Europäisches Patentamt

European Patent Office

Office européen des brevets

(11) Publication number: **0 389 624**
**A1**

# EUROPEAN PATENT APPLICATION
## published in accordance with Art. 158(3) EPC

(21) Application number: 89900369.3

(22) Date of filing: 26.08.88

(86) International application number:
PCT/SU88/00171

(87) International publication number:
WO 90/02438 (08.03.90 90/06)

(51) Int. Cl.5: **H02M 1/08**

(43) Date of publication of application:
03.10.90 Bulletin 90/40

(84) Designated Contracting States:
CH DE FR GB LI SE

(71) Applicant: GOSUDARSTVENNY
NAUCHNO-ISSLEDOVATELSKY
ENERGETICHESKY INSTITUT IMENI
G.M.KRZHIZHANOVSKOGO
Leninsky pr., 19
Moscow, 117921(SU)

(72) Inventor: BEZUGLY, Stanislav Leontievich
ul. Ivanovskaya, 4-9
Zaporozhie, 330041(SU)
Inventor: KOTLYAR, Vladimir Petrovich
ul. Kiyashko 38-54
Zaporozhie, 330065(SU)
Inventor: GRINSHTEIN, Boris Iliich
ul. Ostrovityanova, 16-4-134
Moscow, 117321(SU)
Inventor: ZHMUROV, Valery Pavlovich
ul. Narodnogo Opolchenia, 25-63
Moscow, 123154(SU)
Inventor: TIMOSHENKO, Anatoly Lukich
ul. Remeslennaya, 6-75 Moskovskaya obl.
Noginsk, 142403(SU)

(74) Representative: Crawford, Andrew Birkby et al
A.A. THORNTON & CO. Northumberland
House 303-306 High Holborn
London WC2A 1AY(GB)

(54) DEVICE FOR CONTROL OF RECTIFIERS.

(57) A device for the control of rectifiers which are interconnected in series into four sections (1, 2, 3, 4) comprises a first group (6) of current transformers (7, 8, 9), the first winding (10) of one of which is connected to the output of a generator (11) of controlling current pulses, and further comprises a second group (12) of current transformers (13), the number of which corresponds to that of the rectifiers

(5) and which are interconnected, correspondingly to the sections (1, 2, 3, 4) of the rectifiers (5), into sections (14, 15, 16, 17) consisting each of an equal number of current transformers (13), the primary windings (18) of which are inter-connected in series into cascades, whereas their secondary windings (19) are electrically connected to the controlling inputs (22) of the rectifiers (5). The outputs of the secondary winding (25) of the current transformer (7) are connected in series to the primary windings (10) of the other two transformers (8, 9) of the first group (6) and to primary windings (18) of the middle sections (15, 16) of the current transformers (13) of the second group (12). The outputs of the secondary windings (25) of the two current transformers (8, 9) of the first group (6) are connected to the outputs of the primary windings (18) of the cascade of the outer sections (14, 17) of the current transformers (13) of the second group (12). The device further comprises two resistors (28, 29), connected in series, the common output (30) of which is connected to the common output (31) of the two middle sections (2, 3) of the rectifiers (5), whereas the other outputs are connected to the outputs of the secondary winding (25) of the current transformer (7) of the first group (6). In parallel to each outer section (1, 4) of the rectifiers (5) are connected capacitors (33, 34).

# RECTIFIER CONTROL DEVICE

### Field of the Invention

This invention relates to the area of electric engineering and more specifically to devices for controlling rectifier cells.

### Prior Art

Widely known in the art is a rectifier control device (SU, A, 259998) for rectifiers connected in series and divided into sections with an equal number of rectifiers in each section. This device comprises current transformers with a common primary winding in the form of a symmetrical loop of cable with an ascending and a descending branches. The cable of the current transformer is provided with insulation of the capacitor type, with the number of capacitor plates equal to that of rectifier sections. Forced voltage distribution among current transformers is accomplished by connecting the plates of one branch to the common points of connected in series sections. This control device requires the use of a loop cable with complex insulation of the capacitor type, which is hard to manufacture and should withstand the total working voltage across the chain of rectifiers connected in series.

Also widely known in the art is a device for controlling semiconductor components (Fr, A, 2041951), comprising semiconductor rectifiers connected in series and divided into sections with equal numbers of rectifiers in each. The device further comprises a first group of pulse current transformers with the primary winding of one thereof connected to the output of a control pulse generator and with the secondary winding of this transformer connected to the primary winding of a second current transformer, the secondary winding whereof is connected to the primary winding of the next current transformer of the first group. The current transformers of the first group are cascade connected one to another. The device also comprises a second group of output pulse current transformers, the number whereof is equal to that of rectifiers and connected into sections of equal numbers of current transformers in each, as are the rectifiers. The primary windings of current transformers in each section of the second group are connected in series into stages. The secondary windings of the current transformers are connected via a rectifier circuit to the control inputs of the rectifier cells. One lead of the primary winding of one stage of output pulse current transformers of the second group is connected via the primary winding of one of the pulse current transformers of the first group to a lead of the secondary winding of the pulse current transformer connected to the control pulse generator. The primary winding of each stage of output pulse current transformers of the second group is connected via a capacitor to the secondary winding of one of the pulse current transformers of the first group, the other lead of this winding being connected to the primary winding of another pulse current transformer of the first group.

Current pulses from the output of the control pulse generator are passed via pulse current transformers of the first group to sections of output pulse current transformers of the second group. Control pulses from the secondary windings of pulse current transformers of the second group arrive at rectifier cell gates and cause rectifier enablement.

Cascade connection of pulse current transformers does not ensure simultaneous arrival of control pulses at the rectifier sections. The time of current pulse travel to the respective rectifier section is the longer, the farther is the transformer section from the control pulse current generator. To eliminate this drawback, the pulse current transformers of the first group are provided with shunting capacitors and tuned to resonance, the tuned circuits comprising the transformer inductance and this capacitance.

Tuning these circuits to resonance is hampered by the spread in parameters of the cascade connected pulse current transformers, so that the capacitors have to be selected individually for each section of pulse current transformers.

Pulse current transformers stages of the first group, which pass control current pulses to the rectifier gates, are not conductively coupled to the rectifier circuitry, this resulting in a highly non-uniform pulse voltage distribution along the current transformer stages and rectifier sections. This requires pulse current transformer insulation to be designed to withstand the total voltage of the chain of rectifiers.

This control device does not provide adequate interference immunity of the rectifier control circuitry due to the use of capacitive current transformation with pulse voltages and to driving the rectifier gates by capacitive currents. As a result, spurious enabling of rectifiers in the absence of a control pulse is possible.

Disclosure of the Invention

This invention is to provide a rectifier control device, the design configuration whereof would allow simplifying the insulation of the device components and a higher interference immunity of the rectifier control circuitry.

This is achieved by that the device for controlling rectifiers interconnected into four connected in series sections with an equal number of rectifiers in each section, comprising a first group of current transformers with the primary winding of one thereof connected to the output of a control current pulse generator and with the secondary winding of this current transformer electrically coupled to the primary windings of other current transformers of the first group, a second group of current transformers in number equal to that of the rectifiers and connected into sections with an equal number of transformers in each, corresponding to the rectifier sections, with transformer primary windings connected in series into stages and with secondary windings

EP 0 389 624 A1

- 4 -

electrically coupled to rectifier gates, and also capacitors electrically coupled to rectifier sections, according to the invention further comprises two connected in series resistors with the common point thereof connected to the common point of two middle section of rectifiers and with the other leads thereof connected to the leads of the secondary winding of the transformer of the first group, the primary winding whereof is connected to the output of the control current pulse generator and the secondary winding whereof is connected in series with the primary windings of the other two current transformers of the first group and with the primary windings of the middle transformer sections of the second group, with the secondary windings of said two current transformers of the first group connected to the leads of the primary winding of the stage of end sections of transformers of the second group, wherein one lead of the secondary winding of each of the two said current transformers of the first group is connected to the common point of the end and adjacent middle rectifier sections and the capacitors are connected in parallel to each of the end rectifier sections.

The design arrangement of this invention provides a uniform voltage distribution along the rectifier sections, this allowing the use of simpler insulation, because the current transformer insulation should withstand a quarter of the total working voltage of the rectifier chain. This invention also allows a higher interference immunity of the rectifier control circuitry to be ensured.

Preferred Embodiment

The invention will now be described in greater detail with reference to a specific embodiment of the rectifier control device and to an accompanying drawing showing the circuit diagram of the rectifier control device according to the invention.

The rectifier control device for controlling rectifiers interconnected into four connected in series sections 1,2,3,4

EP 0 389 624 A1

- 5 -

(Fig.I), each having an equal number of rectifiers 5, comprises a first group 6 of current transformers 7,8,9. Primary winding IO of current transformer 7 is connected to the output of control pulse generator II. The device comprises a second group I2 of current transformers I3, in number equalling that of rectifiers 5 and arranged into sections I4, I5, I6, I7 corresponding to rectifier sections I,2,3,4 with an equal number of current transformers I3 in each section I4,I5,I6,I7. The primary windings I9 of current transformers I3 in each section I4,I5,I6, I7 of second group I2 are connected in series into stages and secondary windings I9 thereof are connected via rectifiers 20,2I to gate 22 of each controlled rectifier 5, respectively. Center tap 23 of secondary winding I9 of each current transformer I3 of second group I2 is connected to heavy-duty lead 24 of each controlled rectifier 5, this lead being either the cathode or anode lead of controlled rectifier 5, depending on the type of junction in controlled rectifier 5.

The leads of secondary winding 25 of current transformer 7, the primary winding IO whereof is driven by control current pulse generator II, are connected into a series circuit with primary windings IO of the two other current transformers 8,9 of first group 6 and with primary windings I8 of current transformers I3 of second group I2 in middle transformer sections I5, I6.

The leads of secondary windings 25 of said two current transformers 8,9 of first group 6 are connected to the leads of primary I8 of end sections I4,I7 of current transformers I3 of second group I2. One lead of secondary winding 25 of each of the said transformers 8,9 is connected to the common point 26,27 of the end and adjacent middle sections, I and 2, 3 and 4, respectively, of controlled rectifiers 5.

The control device also comprises two connected in series resistors 28,29 with common point 30 thereof connected to common point 3I of middle sections 2,3 of controlled rectifiers 5. The other leads 32 of resistors 28,29 are connected to the leads of secondary winding 25 of current transformer 7 of first group 6, primary winding IO whereof is driven from the output of control current pulse generator II. Capacitors 33, 34 are connected in parallel to each end section I,4 of controlled rectifiers 5.

The rectifier control device of this invention functions as follows.

Control current pulses from the output of control current pulse generator II (Fig.I) are applied to primary winding IO of current transformer 7 of first group 6.

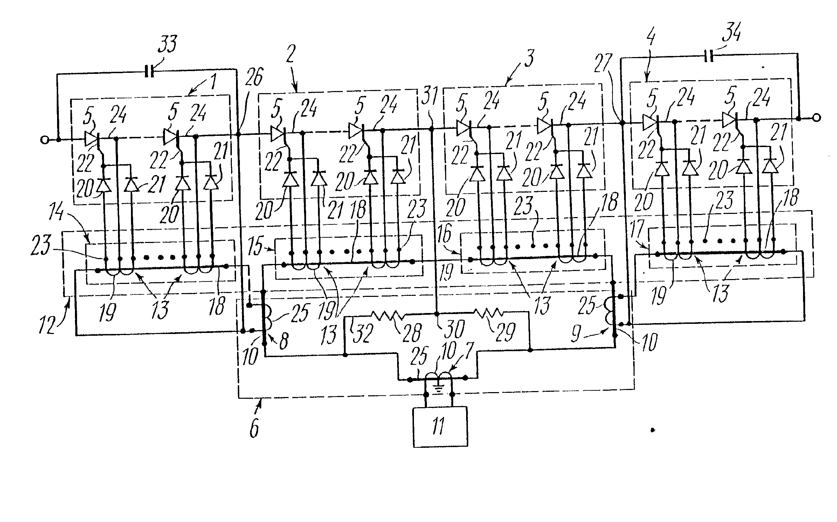

The body of control current pulse generator II is connected to a common bus (not shown in the drawing), with current transformer 7 of first group 6 providing conductive decopling from transformers I3 of second group I2. Current transformers 7,8,9 of first group 6 ensure distribution of control current pulses among primary windings I9 of current transformers I3 of second group I2. Control current pulses arrive at gates 22 of controlled rectifiers 5 via rectifiers 20,21, which provide rectification of current pulses, and enable controlles rectifiers 5, and if these latter are arranged into a three=phase bridge circuit, the heavy=duty circuityy of this bridge is switched.

Voltage distribution along current transformers 13 of second group 12 and sections 1,2,3,4 of controlled rectifiers 5 is provided by capacitors 33,34 and the interwinding capacitances of current transformers 8,9 of first group 6 connected in parallel to respective sections 1,2,3,4 of controlled rectifiers 5: section I of controlles rectifiers 5 is shunted by capacitor 33, section 2 of rectifiers 5 is shunted by the interwinding capacitance of current transformer 7 of firat group 6, section 3 of rectifiers 5 is shunted by the interwinding capacitance of current transformer 7 of first group, and section 4 of rectifiers 5 is shunted by capacitor 34. Voltage variations cause charging of capacitors 33,34 and interelectrode caoacitances of current transformers 8,9 of first group 6. Capacitors 33,34 are connected in parallel in parallel to the end sections I,4 of controlled rectifiers 5, where deviations of the pulse voltage from the mean voltage value are maximal.

Current transformers 7,8,9 of first group 6 are single-turn devices designed as a coaxial cable with an insulation designed to withstand the working voltage of one section I4,I5,I6,I7 of second group I2 current transformers I3, this being equal to a quarter of the working voltage of the chain of controlled rectifiers 5.

The primary winding I8 of second group I2 current transformers I3 is the cable conductor, with the cable braiding constituting secondary winding I9 of second group I2 current transformers I3.

The insultation of current transformers of the first and second groups 6,I2 is designed to withstand a quarter of the working voltage across the chain of controlled rectifiers 5.

Control current pulses are entered via current transformer 7 of first group 6 to the middle sections I5,I6 of group I2 current transformers I3, secondary windings 25 of first group 6 current transformers 8,9 being connected to respective common points of end section I,4 and middle sections 2,3 of controlled rectifiers 5.

The charging currents of capacitors 33,34 do not flow in the circuits of second group I2 current transformers I3, but rather flow along the path: capacitors 33,34 - current transformers 8,9 of first group 6 - resistors 28,29, this excluding the effects of capacitive currents on control current pulse generator II and therefore improving the interference immunity of the chain of controlled rectifiers 5.

Application of this invention simplifies the design of the control device components, allows the use of standard cables with an insulation designed to withstand a quarter of the working voltage and improves the performance reliability, while reducing materials consumption and labour costs.

Industrial Applicability

This invention can be used in converter engineering to control rectifiers in high-voltage converters and in diverse converter circuitry.

C L A I M:

A rectifier control device for controlling rectifiers interconnected into four connected in series sections (I,2, 3,4) of controlled rectifiers (5), comprising a first group (6) of current transformers (7,8,9) with the primary winding (IO) of one thereof connected to the output of control current pulse generator (II) and with the secondary winding (25) of this transformer (7) electrically coupled to primary windings (IO) of the other current transformers (8,9) of first group (6), a second group (I2) of current transformers(I3) in number equal to that of controlled rectifiers (5) and connected into section (I4,I5,I6,I7) corresponding to sections (I,2,3,4) of controlled rectifiers (5) with an equal number of current transformers (I3) in each section (I4,I5,I6,I7), wherein primary windings (I8) are connected in series into stages and secondary windings (I9) are electrically coupled to gates (22) of controlled rectifiers (5), and also capacitors (33,34) electrically coupled to sections (I,2,3,4) of controlled rectifiers (5), characterized by that the control device further comprises two connected in series resistors (28,29) with the common point (30) thereof connected to the common point (3I) of two middle sections (2,3) of controlled rectifiers (5) and with their other leads (32) connected to the leads of current transformer (7) secondary winding (25) of first group (6), the primary winding (IO) whereof is connected to control current pulse generator (II) and the secondary winding (25) is further connected into a series circuit with the primary windings (IO) of the other two first group (6) current transformers (8,9) and with the primary windings (I8) of middle sections (I5,I6) of second group (I2) current transformers (I3), with the leads of the said two current transformers (8,9) of first group (6) connected to the leads of primary winding (I8) of the stage of end sections (I4,I7) of second group (I2) current transformers (I3), wherein one lead of secondary winding (25) of each of the said current transformers (8,9) is connected to the common point of an end and adjacent middle sections (I and 2, 3 and 4) of controlled rectifiers (5) and wherein capacitors (33,34) are connected in parallel to each of the end sections (I,4) of controlled rectifiers (5).

# INTERNATIONAL SEARCH REPORT

International Application No PCT/SU 88/00171

## I. CLASSIFICATION OF SUBJECT MATTER (If several classification symbols apply, indicate all) [6]

According to International Patent Classification (IPC) or to both National Classification and IPC

IPC[4]   H 02 M 1/08

## II. FIELDS SEARCHED

Minimum Documentation Searched [7]

| Classification System | Classification Symbols |
|---|---|
| IPC[4] | H 02 M 1/08 1/088 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 253220 (Leningradsky politekhnichesky institut im M.I. Kalinina) 26 March 1970 (26.03.70) see column 2, lines 24-30; column 3, lines 1-6 | 1 |
| A | US, A, 3742331, (AKTIENGESELLSCHAFT BROWN BOVERI & CIE.), 26 June 1973 (26.06.73) see figure 2 | 1 |
| A | DE, A1, 2612549, (SIEMENS AG), 6 October 1977 (06.10.77) see figures 1,2 | 1 |
| A | FR, A5, 2041951 (COMPAGNIE GENERALE D'ELECTRICITE) 5 February 1971 (05.02.71) see figure 1, cited in the description | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 16 May 1989 (16.05.89) | 24 May 1989 (24.05.89) |

| International Searching Authority | Signature of Authorized Officer |
|---|---|
| ISA/SU | |

Form PCT/ISA/210 (second sheet) (January 1985)